# EUROPÄISCHE PATENTSCHRIFT

(11) **EP 1 952 049 B1**
(45) Veröffentlichungstag und Bekanntmachung des Hinweises auf die Patenterteilung: **25.08.2010**
(21) Anmeldenummer: 06818728.5
(22) Anmeldetag: 22.11.2006
(51) Int. Cl.: F16L 13/14, F16L 25/00, F16L 33/207, F16L 33/26

(54) **WELLROHRSCHLAUCHARMATUR UND ANSCHLUSSVERFAHREN**
CORRUGATED FLEXIBLE TUBE FITTING AND METHOD OF CONNECTION
GARNITURE POUR TUYAU A TUBE ONDULE ET PROCEDE DE RACCORDEMENT

(30) Priorität: 24.11.2005 DE 102005056023
(43) Veröffentlichungstag der Anmeldung: 06.08.2008
(73) Patentinhaber: Eaton Fluid Power GmbH, 76532 Baden-Baden (DE)
(72) Erfinder: HILGERT, Andreas, 76547 Sinzheim (DE); WELLE, Stefan, 76549 Hügelsheim (DE); LEISENHEIMER, Bert, 76689 Karlsdorf/Neuhard (DE)
(74) Vertreter: Leadbetter, Benedict
(86) Internationale Anmeldenummer: PCT/EP2006/011181
(87) Internationale Veröffentlichungsnummer: WO 2007/059930

(56) Entgegenhaltungen:
- WO-A-02/061322
- DE-A1- 10 234 372
- DE-C2- 10 104 448

## Beschreibung

Die Erfindung betrifft eine Wellrohrschlaucharmatur und ein Anschlussverfahren für einen Wellrohrschlauch.

Zur Verbindung von fluidführenden Aggregaten, werden beispielsweise in der Kraftfahrzeugtechnik sog. Wellrohrschläuche eingesetzt. Solche Wellrohrschläuche weisen ein inneres, aus Metall bestehendes sehr dünnwandiges Wellrohr auf, das als Permeationssperre dient und dem Schlauch eine gewisse Flexibilität gibt. Das Wellrohr ist von einer Ummantelung umgeben, die im Wesentlichen aus Kunststoff, Elastomermaterial sowie weiteren Komponenten, wie beispielsweise Gewebelagen besteht, die dem Wellrohrschlauch die geforderte Druckfestigkeit geben. In der Regel ist die Ummantelung mehrschichtig aufgebaut. Unmittelbar an das Wellrohr anschließend, ist in der Regel eine Elastomerschicht ausgebildet. Diese umhüllt die an dem Wellrohr ausgebildeten Rippen und füllt die dazwischen vorhandenen Täler aus. Das Elastomer ist beispielsweise ein HNBR-, EPM- oder EPDM-Elastomer. Das innere Wellrohr besteht hingegen meist aus Edelstahl. Es kann nach Art eines Balgs ausgebildet sein und voneinander beabstandete, ringförmige Rippen aufweisen. Alternativ kann es eine einzige Rippe aufweisen, die schraubenförmig ausgebildet ist und somit eine Vielzahl von benachbarten Windungen festlegt.

Zum praktischen Einsatz solcher Wellrohrschläuche ist es erforderlich, entsprechende Abschnitte desselben mit Anschlussmitteln zu versehen, beispielsweise mit geeigneten Anschlussnippeln. Dabei werden an die Anschlusstechnik hohe Anforderungen gestellt. Sind die Wellrohrschläuche für höchste Drücke ausgelegt, wobei Berstdrücke von etwa 700 Bar festgelegt sein können, muss auch der entsprechende Anschlussnippel und insbesondere die Verbindungsstelle zwischen dem Anschlussnippel und dem Wellrohrschlauch diesem Berstdruck gewachsen sein. Eine besondere Schwierigkeit ergibt sich dabei, wenn an die Dichtheit des Anschlussnippels und zwar insbesondere hinsichtlich der Verbindung des Anschlussnippels zu dem Wellrohrschlauch höchste Anforderungen gestellt werden. Beispielsweise werden CO₂ gefüllte Klimaanlagen eines Kraftfahrzeugs mit sehr geringen Kältemittelmengen (CO₂) betrieben. In solchen Fällen muss die Leckrate minimal sein, um über Jahre hinweg einen ungestörten Betrieb der Anlage sicherzustellen.

Die Anschlusstechnik von Wellrohrschlauchleitungen in druckführenden Systemen ist Gegenstand der DE 1 01 04 448 C2. Diese Druckschrift offenbart einen Anschlussnippel und ein Verfahren zum Anschließen desselben am Wellrohrschlauch. Der Anschlussnippel besteht aus zumindest zwei rohrförmigen Abschnitten, von denen einer das freigelegte Ende des Wellrohrs und der andere die äußere Ummantelung des Wellrohrschlauchs umfasst. In die ringförmigen Wellentäler oder Nuten des Wellrohrs sind ein oder mehrere O-Ringe eingelegt, die eine Dichtung bewirken sollen. Zudem kann das freie Ende des Wellrohrs mit einer fortführenden Leitung verschweißt sein, um Dichtheit sicherzustellen. Zur mechanischen Fixierung werden die beiden Rohrabschnitte des Anschlussnippels radial nach innen komprimiert und somit sowohl mit dem Wellrohr, als auch mit der Ummantelung des Wellrohrschlauchs verpresst.

Diese Anschlusstechnik hat sich bewährt. Sie ist jedoch hinsichtlich des Herstellungsaufwands anspruchsvoll. Dies gilt insbesondere im Hinblick auf die Herstellung einer Schweißnaht an dem Ende des Wellrohrs, wenn das Wellrohr sehr dünn ist, und hinsichtlich der Säuberung des freigelegten Endes des Wellrohrs zur Ausbildung eines fluiddichten O-RingSitzes.

Aus der WO 02/0613222 A1 ist eine Wellrohrschlaucharmatur bekannt, die ein teilweise von einer Elastomeraußenhülle befreites Ende der Wellrohrschlauchleitung fasst. Die Schlaucharmatur weist eine äußere Presshülse und eine sich axial in diese hinein erstreckende rohrförmige Sonde auf, die außen einen kreiskegelförmigen Abschnitt aufweist. Dieser ragt in das von der Außenhülle befreite Ende der Wellrohrschlauchleitung und drückt diese konisch nach außen. Dieser Teil ist von einem konischen Ring umgeben, der zwischen der äußeren Hülse der Schlaucharmatur und der Wellrohrschlauchleitung sitzt.

Außerdem sind aus der DE 102 34 372 A1 und der DE 10104448 zwei Wellrohrschlauchleitungsarmaturen bekannt, bei denen ein teilweise von der äußeren Umhüllung befreites Ende der Wellrohrschlauchleitung in einer Presshülse sitzt. Die Presshülse ist wiederum in der Schlaucharmatur gefasst, wobei die Abdichtung durch die aus einem Elastomermaterial bestehende Presshülse bzw. zwei Dichtungsringen hergestellt wird.

Es ist deshalb nach Alternativen gesucht worden, die ohne einen entsprechenden Schweißvorgang und insbesondere ohne den genannten Reinigungsvorgang des O-Ringsitzes auskommen. Dazu wird auf die DE 102 34 372 A1 verwiesen, die ebenfalls ein Anschlussverfahren, sowie eine Anschlusseinrichtung für einen Wellrohrschlauch offenbart. Die Anschlusseinrichtung umfasst wiederum einen Anschlussnippel, bestehend aus zwei rohrförmigen Abschnitten unterschiedlichen Durchmessers. Der kleinere Abschnitt ist dem freigelegten Ende des Wellrohrs zugeordnet, während der größere Abschnitt dazu dient, die Ummantelung außen zu umfassen. Bei dem Anschlussverfahren wird das Ende des Wellrohrs freigelegt, wobei allerdings auf die Entfernung verbleibenden Elastomermaterials zwischen den Rippen verzichtet werden kann. Der diesem Abschnitt des Wellrohrs zugeordnete Rohrabschnitt des Anschlussnippels, ist mit einer Dichtungsbuchse versehen, die aus einem geeigneten Kunststoff oder einem Elastomer besteht. Die Dichtungsbuchse stellt ein Dichtungselement dar, das zwischen den Rippen des Wellrohrs und dem Rohrabschnitt des Anschlussnippels abdichtend wirkt.

Mit dieser Anschlusstechnik lassen sich druckfeste, mechanisch belastbare Verbindungen herstellen, wobei jedoch aufgrund der relativ voluminösen Dichtungsbuchse diffusionssichere Dichtungsmaterialien ausgewählt werden müssen. Bei niedernmolekularen Kältemitteln, wie insbesondere CO₂, kann dies zu Schwierigkeiten führen.

Davon ausgehend ist es Aufgabe der Erfindung, eine Anschlusseinrichtung für eine Wellrohrschlauchleitung zu schaffen, die prozesssicher zu montieren ist und verlässlich zu einer hohen und dauerhaften Dichtheit führt. Desweiteren ist es Aufgabe der Erfindung, ein entsprechendes Anschlussverfahren zu schaffen.

Diese Aufgabe wird mit der Wellrohrschlauchleitung nach Anspruch 1, sowie mit dem Verfahren zum Anschließen eines Wellrohrschlauchs nach Anspruch 20 gelöst:
Zu der erfindungsgemäßen Wellrohrschlauchleitung gehören ein Wellrohrschlauch und zumindest eine an diesem befestigte Fassung. Die Fassung weist zumindest einen ersten rohrförmigen Teil auf, der einen freigelegten Endabschnitt des Wellrohrs aufnimmt. Der freigelegte Endabschnitt wird erhalten, indem von einem endständigen Abschnitt des Wellrohrschlauchs ein Teil der Ummantelung entfernt wird. Die Besonderheit liegt dabei darin, dass in den Zwischenräumen zwischen benachbarten Rippen oder auch dem Zwischenraum benachbarter Windungen (je nach Ausbildung des Wellrohrs) Elastomermaterial der Ummantelung erhalten bleibt. Dabei wird vorzugsweise so viel Elastomermaterial erhalten, dass der Zwischenraum zwischen den Rippen bzw. Windungen vollständig ausgefüllt bleibt. Vorzugsweise erstreckt sich das Elastomermaterial somit zumindest bis zu einem Radius, der mit dem äußeren Radius der Rippen, d. h. deren Scheitel übereinstimmt oder diesen übersteigt. Alternativ können die Zwischenräume zwischen den Rippen bzw. Windungen auch teilweise oder ganz von Elastomer befreit und nachträglich wieder mit Elastomer aufgefüllt werden. Vorzugsweise wird eine stoffschlüssige Verbindung zwischen dem Metall des Wellrohrs und dem Elastomer hergestellt. Dies beseitigt die sonst beim Einlegen von O-Ringen in die Rippenzwischenräume vorhandenen Anlage- oder Trennflächen, an denen das Elastomer an dem Wellrohr lediglich anliegt. Auch kann auf das aufwändige Reinigen zur Vorbereitung des Sitzes zur Aufnahme des O-Rings verzichtet werden.

Durch die genaue Übereinstimmung der Form des zwischen den Rippen verbleibenden Elastomerkörpers und den Rippen sowie gegebenenfalls zusätzlich durch die Verklebung zwischen Elastomer und Metall wird eine verbesserte Dichtwirkung erreicht. Außerdem lässt sich der Wellrohrschlauch auf diese Weise besonders einfach zur Verbindung mit der Fassung herrichten. Bei der Entfernung der Ummantelung können die Scheitellinien der ringförmigen Rippen oder der schraubenförmigen Rippe zur Führung eines Werkzeugs dienen, das das vergleichsweise weiche Elastomermaterial entfernt. Der vorbereitete Anschlussabschnitt des Wellrohrs ist somit vorzugsweise im Wesentlichen zylindrisch.

Zur Herstellung des fluiddichten Presssitzes des Wellrohrs in dem ersten Teil der Fassung wird eine Deformation des rohrförmigen ersten Teils in radialer Richtung vorgenommen. Die Deformation ist in einem ringförmigen Bereich durchzuführen, der eine Rippe des Wellrohrs oder mehrere Rippen desselben überspannt. Die Deformation kann beispielsweise durch eine Pressvorrichtung vorgenommen werden, die mehrere sich radial nach innen bewegende Pressbacken aufweist, und unter deren Wirkung der rohrförmige Teil verengt, um das Wellrohr einzuklemmen. Die Lagerung und Klemmung des Wellrohrs an mehreren Rippen ergibt eine besonders sichere mechanische Verbindung und gute Abdichtung. Die Verpressung erfolgt z.B. mittels mechanischer Presswerkzeuge, mit Rolliereinrichtungen oder dergleichen.

Alternativ kann eine Magnetkompression angewendet werden, bei der eine die Fassung konzentrisch umgebende Magnetspule mit einem Stromimpuls beaufschlagt wird. Ist diese ausreichend groß bemessen, kann eine Kompression der Fassung in dem interessierenden Abschnitt erreicht werden. Beide Verfahren (mechanische Deformation, magnetische Deformation) führen zu einer plastischen Deformation des ersten Teils der Fassung.

Darüber hinaus ist es möglich, die Presspassung zwischen der Fassung und dem Wellrohr durch einen thermischen Schrumpfvorgang herbeizuführen, beispielsweise indem der erste Teil der Fassung in Bezug auf das Wellrohr ein Untermaß aufweist. Wird das Wellrohr dann mit beispielsweise flüssigem Stickstoff gekühlt und andererseits die Fassung auf beispielsweise 200° oder 300° erwärmt, lässt sich das Wellrohrende in die Fassung einführen. Nach Ausgleich der Temperaturunterschiede hat sich der Fassungsteil zusammengezogen und das Wellrohr wieder ausgedehnt, wodurch eine radiale Presskraft zwischen der Wandung des ersten Teils der Fassung und dem Wellrohr entsteht.

Es ist darüber hinaus möglich, einen festen Sitz des Endbereichs des Wellrohrs in dem ersten Teil der Fassung zu erreichen, indem das Wellrohr axial komprimiert wird. Dazu wird das von der Ummantelung befreite Ende des Wellrohrs in den Fassungsteil eingeschoben und dort axial soweit komprimiert, dass die sich stauchenden Rippen radial nach außen etwas ausweichen, wodurch eine Verpressung mit der Wandung des Fassungsteils entsteht.

Mehrere der vorgestellten Maßnahmen können miteinander kombiniert werden wenn dies gewünscht wird, um eine feste Verpressung zu erzielen. Das vorgestellte Anschlussverfahren eignet sich insbesondere für den Anschluss von Wellrohrschläuchen mit sehr dünnwandigem Wellrohr, bei denen das Wellrohr nicht geschweißt werden kann.

Bei der Verpressung des rohrförmigen Teils der Fassung mit dem so vorbereiteten Wellrohrabschnitt, wird der rohrförmige Teil radial nach innen komprimiert. Es entsteht dadurch ein dichter Sitz des Wellrohrs in dem äußeren Rohr, der sich als überaus diffusionsdicht erwiesen hat. Auf Schweißverbindungen oder zusätzliche Dichtungselemente kann verzichtet werden.

Im bevorzugten Falle entsteht eine gemischte Dichtung, die aus einer Aneinanderreihung von Dichtungsstellen Metall/Metall und Metall/Elastomer besteht. Dies ergibt eine ausgezeichnete Dichtheit, d.h. eine äußerst geringe Leckrate. Gasmolekühle, die die Metall/Metall-Dichtung, bestehend aus dem äußeren Rohr und dem ringförmigen äußeren Scheitel einer Rippe des Wellrohrs überwunden haben, finden zunächst einen Elastomerkörper vor, der als Diffusionshemmnis wirkt. Durchwandern die Gasmolekühle diesen Elastomerkörper allmählich, treffen sie dann wiederum auf eine Metall/Metall-Dichtung. Dies wiederholt sich mehrmals, so dass der Diffusionswiderstand insgesamt extrem hoch wird. Durch die Ausfüllung der Zwischenräume zwischen den Rippen mit Elastomermaterial, können die wenigen Gasmolekühle, die die erste Metall/Metall-Dichtung durchquert haben, in dem nachfolgenden, von Elastomer gefüllten Raum nur einen geringen Partialdruck aufbauen. Die nachfolgende Metall/Metall-Dichtung kann deshalb schon nahezu als absolut dicht angesehen werden. Insgesamt wird somit eine Dichtung nach Art einer Labyrinthdichtung ausgebildet, wobei es sich um eine ruhende Dichtung handelt und die bei einer Labyrinthdichtung sonst vorhandenen Hohlräume Elastomer gefüllt sind.

Die Kompression des rohrförmigen Teils der Fassung bewirkt ein festes Anliegen des rohrförmigen Teils an den Rippen des Wellrohrs, wie auch an dem verbleibenden Elastomermaterial. Bedarfsweise kann das Elastomermaterial zusätzlich stoffschlüssig mit dem rohrförmigen Teil der Fassung verbunden werden, beispielsweise indem es mit diesem verklebt wird. Dazu wird das freigelegte Ende des Wellrohrs vor dem Einsetzen in die Fassung mit einem Elastomer lösenden, vorzugsweise flüchtigen Mittel versehen. Auch ist es möglich, in die Fassung oder auf das Ende des Wellrohrs eine dünne Schicht nicht vernetzten oder wenig vernetzten Elastomers aufzubringen, das im Anschluss an die Herstellung der Pressverbindung beispielsweise durch Wärme oder durch Wirksamwerden eines chemischen Aktivators vernetzt und so eine Stoffschlüssige Verbindung zwischen der Fassung und dem Elastomerkörper herstellt.

Die Deformation des rohrförmigen Teils der Fassung kann über einen ringförmigen Bereich erfolgen, der mehrere Rippen des Wellrohrs überdeckt. Die Deformation kann einen zylindrischen Bereich gleichmäßig betreffen. Es ist auch möglich, die Deformation in einzelnen Ringzonen, die beispielsweise mit Rippenzwischenräumen des Wellrohrs übereinstimmen, vertieft auszubilden. Dadurch kann die Flächenpressung auf das Elastomermaterial zwischen den Rippen erhöht werden. Der von dem Elastomermaterial aufgenommene Druck wird von dem Elastomer auf die seitlichen Flanken der Rippen übertragen, wodurch die Rippen wiederum axial komprimiert werden können. Dieser Effekt kann eine Spannung der Rippen radial nach außen bewirken, wodurch die Pressung zwischen der ringförmigen Scheitellinie der Rippe und der Innenseite der Fassung erhöht werden kann.

Vorzugsweise wird das Elastomer der Ummantelung soweit entfernt, dass von den einzelnen Rippen wenigstens linienförmige Scheitelbereiche freiliegen, um mit der Fassung einen Metall/Metall-Kontakt zu bilden. Dies erbringt eine hohe Dichtheit. Es kann im Einzelfall jedoch auch zweckmäßig sein, das Elastomer nur so weit zu entfernen, dass die Rippen auch an ihren Scheiteln gerade noch von einer dünnen Elastomerschicht von beispielsweise 0,1 mm Dicke bedeckt sind.

In diesem Fall sollte der Pressvorgang so geführt werden, dass die dünne, den Rippenscheitel bedeckende Elastomerhaut von dem nach innen komprimierten rohrförmigen Teil durchgequetscht, d.h. durchtrennt wird, so das wiederum ein Metall/Metall-Kontakt zwischen der Fassung und dem Wellrohr erzielt wird. Das Elastomer steht in diesem Fall unter hohem Kompressionsdruck, was der Dichtheit zugute kommt.

Es wird als zweckmäßig angesehen, das Elastomermaterial der inneren Lage der Ummantelung des Wellrohrschlauchs von vornherein so festzulegen, dass es widerstandsfähig gegen das abzudichtende Fluid ist. Darüber hinaus kann es vorteilhaft sein, das Material so auszuwählen, dass es hinsichtlich des abzudichtenden Fluids oder Bestandteilen desselben quellfähig ist. Wird beispielsweise CO₂ einer Kältemaschine in den Wellrohrschlauch geführt und enthält dieses etwas Schmiermittel, beispielsweise Öl, können das Öl und das Ummantelungsmaterial des Wellrohrschlauchs so aufeinander abgestimmt sein, dass das Öl in geringfügigem Maße in das Elastomermaterial der Ummantelung hinein diffundieren kann. Diese Diffusion kann zu einem Aufquellen des Elastomermaterials und somit zu einem zusätzlichen Verpressen der Verbindung führen. Außerdem können die dann in die Matrix des Elastomermaterials eingelagerten Ölmoleküle eine Diffusion von CO₂ durch den Elastomerkörper behindern oder verhindern. Eine geeignete Wahl für das Elastomermaterial ist unter diesem Aspekt beispielsweise HNBR EPM oder EPDM in Verbindung mit einem längerkettigen Mineralöl als Bestandteil des von dem Wellrohr zu fassenden Fluids.

Es wird desweiteren als vorteilhaft angesehen, die Fassung aus einem weniger edlen Material als das Wellrohr auszubilden. Beispielsweise besteht das Wellrohr aus Edelstahl und die Fassung aus Aluminium oder einer Aluminiumlegierung. In der elektrochemischen Spannungsreihe ist das Material der Fassung somit negativer als das Material des Wellrohrs. Es kann dabei vorteilhaft sein, an der Berührungsstelle zwischen der Rippe des Wellrohrs und der Fassung in geringem Maße Kontaktkorrosion herbeizuführen. Dies ist beispielsweise schon durch Montage der Verbindung zwischen dem Wellrohrschlauch und der Fassung in nicht trockener Luft möglich. Ggf. kann an dem Montageplatz gezielt Feuchtigkeit, beispielsweise in Form von Dampf zugeführt werden. Die sich an der Berührungsstelle von Fassung und Wellrohr ausbildende Kontaktkorrosion erzeugt Korrosionsprodukte, wie beispielsweise Aluminiumoxid und Aluminiumhydroxid, das in dem Metall/Metall-Spalt aufquillt und diesen unter hohem Druck versperrt. Außerdem können die sich ausbildenden Metalloxide und Metallhydroxide einen außerordentlich hohen Diffusionswiederstand haben.

Die obigen Varianten und Vorteile gelten entsprechend für einen Wellrohrschlauch, dessen Wellrohr eine oder mehrere wendelförmige Rippen aufweist, die Windungen bilden. Der zwischen zwei benachbarten Windungen vorhandene Elastomerkörper bildet eine Dichtung, deren axialer Diffusionswiderstand hoch ist. Geringe Fluidmengen können die den in Längsrichtung, d.h. etwa in Umfangsrichtung durchwandern. Wegen der Länge des Diffusionsweges ist der Diffusionswiderstand und somit die Dichtigkeit jedoch sehr hoch.

Das vorgestellte Anschlussverfahren eignet sich insbesondere auch bei Hochdruckanwendungen für den Anschluss von Wellrohrschläuchen mit sehr dünnwandigem Wellrohr, bei denen das Wellrohr dem anliegenden Innendruck allein nicht gewachsen ist. Beträgt dieser z.B. 200 bar und ist das Wellrohr allein nur bis etwa 20 bar druckfest ist insbesondere der Übergangsbereich des freigelegten Wellrohrs gefährdet, der in dem nicht komprimierten Abschnitt des rohrförmigen Teils der Fassung sitzt. Vorzugsweise wird die Ummantelung von dem Wellrohr in diesem Bereich nun so entfernt, dass das Wellrohr mit dem verbleibenden Elastomer mit geringem oder ohne Spiel an der Innenwandung des rohrförmigen Teils anliegt. Dieses übernimmt in diesem Bereich die Abstützung, die ansonsten von der Ummantelung erbracht wird.

Weitere Einzelheiten vorteilhafter Ausführungsformen der Erfindung sind Gegenstand der Zeichnung oder der Beschreibung oder von Ansprüchen.

In der Zeichnung sind Ausführungsbeispiele der Erfindung veranschaulicht. Es zeigen:
- Fig. 1: die erfindungsgemäße Wellrohrschlauchleitung in einer ausschnittsweisen längs geschnittenen Darstellung,
- Fig. 2: die Fassung der Wellrohrschlauchleitung nach Fig. 1 in längs geschnittener Darstellung,
- Fig. 3: einen Wellrohrschlauch in ausschnittsweiser längs geschnittener Darstellung,
- Fig. 4: einen zur Verbindung mit der Fassung gemäß Fig. 2 eingerichteten Wellrohrschlauch in ausschnittsweiser
- längs: geschnittener Darstellung,
- Fig. 5: eine abgewandelte Ausführungsform des vorbereiteten Wellrohrschlauchs zur Verbindung mit der Fassung gemäß Fig. 2 in ausschnittsweiser längs geschnittener Darstellung,
- Fig. 6: eine weitere Ausführungsform eines zur Verbindung mit der Fassung nach Fig. 2 eingerichteten Wellrohrschlauchs in ausschnittsweiser längs geschnittener Darstellung,
- Fig. 7: ein vorbereitetes Ende des Wellrohrschlauchs nach Fig. 5 in einem anderen Maßstab vor dem Verpressen mit der Fassung,
- Fig. 8: das Ende des Wellrohrs nach Fig. 7 nach dem Verpressen mit der Fassung,
- Fig. 9 und 10: verschiedene Ausführungsformen von zum Verpressen vorbereiteten Enden eines Wellrohrschlauchs,
- Fig. 11: den Metall/Metall-Kontakt zwischen Wellrohr und Fassung in kordierten Zustand und
- Fig. 12: eine weitere Ausführungsform eines Wellrohrschlauchs mit verpresster Fassung in ausschnittsweiser längs geschnittener Darstellung.

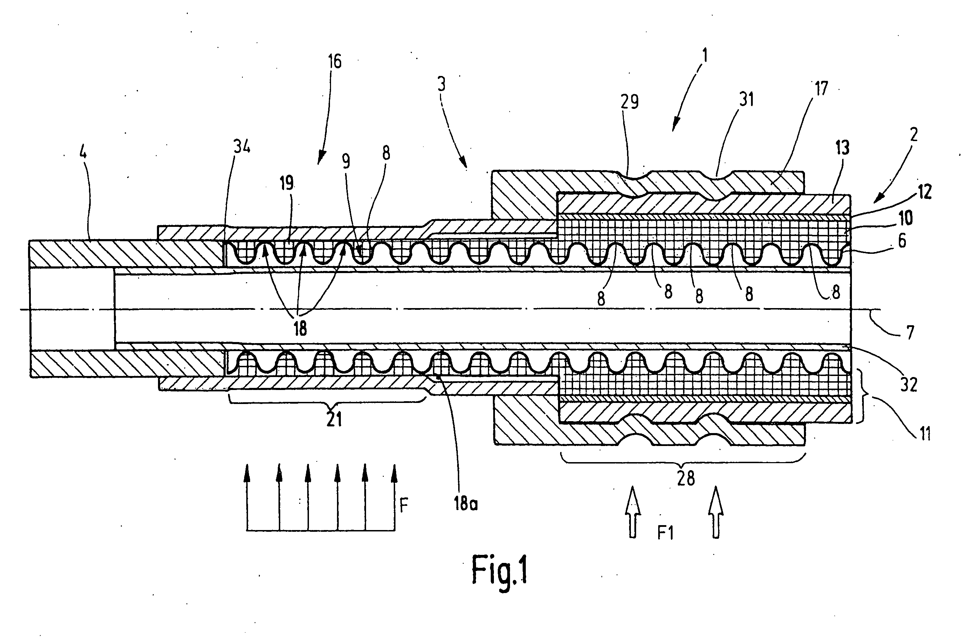

In Fig. 1 ist eine Wellrohrschlauchleitung 1 im Ausschnitt veranschaulicht. Zu ihr gehören ein Wellrohrschlauch 2 und eine Fassung 3, die zum Anschluss des Wellrohrschlauchs 2 an eine fortführende Leitung 4 dient. Anstelle der Leitung 4 können auch Schraubnippel, Stecknippel oder dergleichen vorgesehen sein.

Zu dem Wellrohrschlauch 2 gehört ein Wellrohr 6, das beispielsweise aus einem dünnen Edelstahlblech besteht und nach Art eines langen Balgs ausgebildet ist. Das Wellrohr 6 erstreckt sich längs einer Mittelachse 7 und weist eine Vielzahl zu der Mittelachse 7 konzentrischer, voneinander beabstandeter, jeweils ringförmiger Rippen 8 auf. Dadurch ist der Längsschnitt durch das Wellrohr 6 ungefähr sinusförmig, wobei die Rippen 8 einem Sinus nicht exakt folgen müssen. Sie können auch halbkreisförmig oder ähnlich ausgebildet sein.

Zwischen den Rippen 8 sind Zwischenräume 9 festgelegt, die von außen auf das Wellrohr 6 gesehen, als ringförmige Nuten oder Rillen in Erscheinung treten.

Auf die Außenseite des Wellrohrs 6 ist eine Elastomerschicht 10 aufgebracht, die zu einem Mantel 11 gehört und an dem Wellrohr 6 haftet. Die Elastomerschicht 10 ist jedenfalls wenigstens so dick, dass sie die Zwischenräume 9 vollständig ausfüllt. Die Elastomerschicht 10 umhüllt das Wellrohr 6 und trägt weitere Lagen. Auf die Elastomerschicht 10 können von innen nach außen Gewebelagen 12, weitere Elastomerlagen 13, Kunststofflagen, beispielsweise in Form von Polymerschichten oder dergleichen folgen.

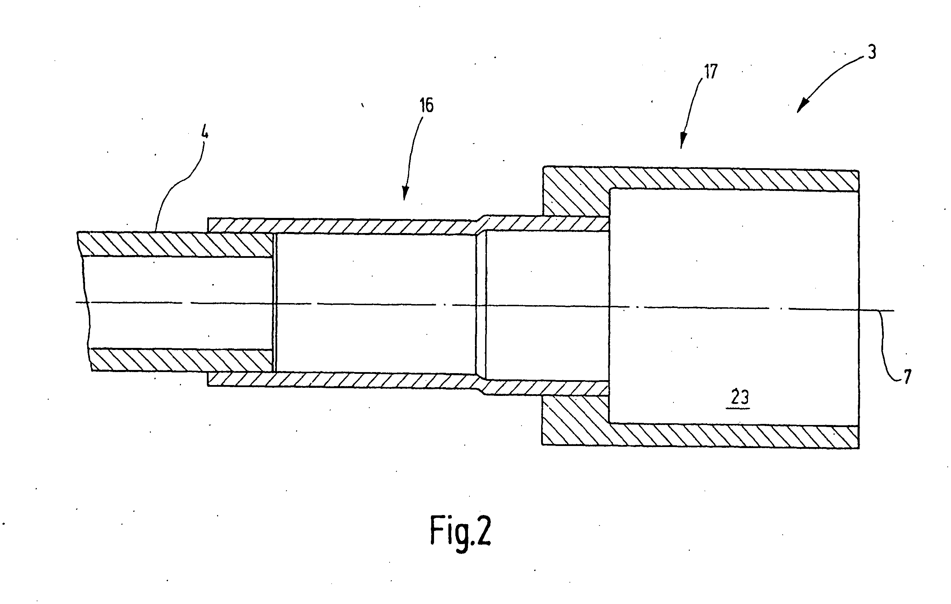

Die zum Anschluss des Wellrohrschlauchs 2 vorgesehene Fassung 3 ist in Fig. 2 gesondert veranschaulicht. Sie weist konzentrisch zu der Mittelachse 7 ein erstes rohrförmiges Teil 16 mit einem Durchmesser auf, der nur geringfügig größer ist als der Außendurchmesser der Rippen 8 des Wellrohrs 6. An diesem Teil 16 schließt sich ein zweiter, ebenfalls rohrförmiger Teil 17 an, dessen Durchmesser etwas größer ist, als der Außendurchmesser des Wellrohrschlauchs 2, d. h. seiner Elastomerlage 13. Die Teile 16, 17 sind miteinander fluiddicht verbunden, beispielsweise verschweißt. Sie können auch einstückig in Form eines Gussteils oder Pressteils ausgebildet sein. Der rohrförmige Teil 16 ist mit der Leitung 4 verpresst, verschweißt, verklebt oder anderweitig dauerhaft fluiddicht verbunden.

Wie Fig. 1 veranschaulicht, sind den Teilen 16, 17 unterschiedliche Aufgaben zugewiesen. Das Teil 16 nimmt ein freigelegtes Ende des Wellrohrs 6 auf, während das Teil 17 zur Fassung und Halterung des Wellrohrschlauchs 2 an seiner äußeren Elastomerlage 3 dient. Das Teil 16 kann zumindest in seinem an das Teil 17 anschließenden Bereich mit dem Wellrohr 6 und dem verbleibenden Elastomer einen Spalt 18a begrenzen. Es wird jedoch bevorzugt, den Durchmesser des Teils 16 und des freigelegten Endes so aufeinander abzustimmen, dass der Spalt 18a verschwindet. Damit übernimmt das Teil 16 auch in seinem später nicht komprimierten Bereich die radiale Abstützung des Wellrohrs.

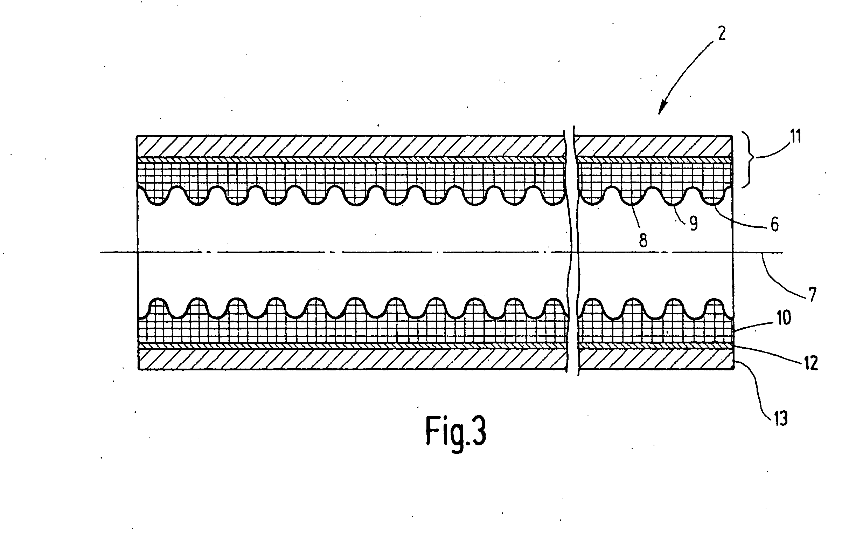

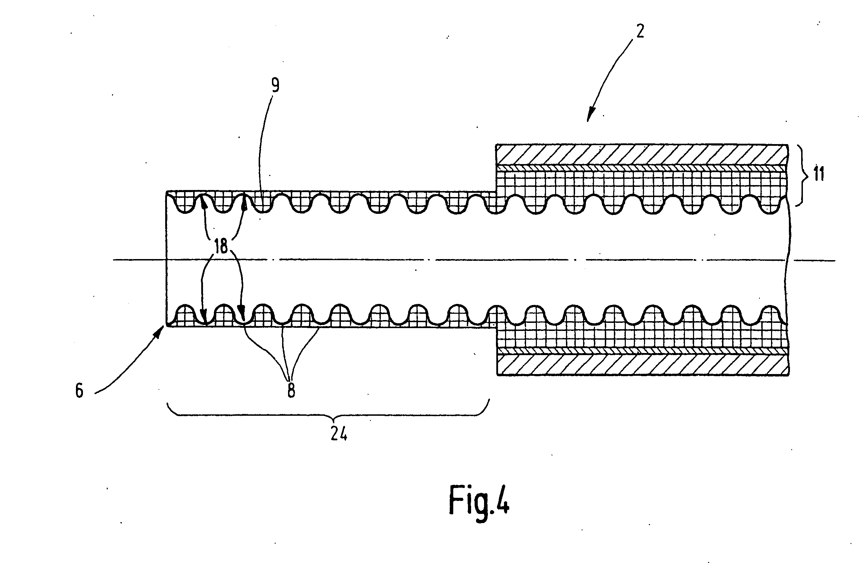

Zur Herstellung der Wellrohrschlauchleitung 1 gemäß Fig. 1 wird dabei wie folgt vorgegangen:
Zunächst wird ein entsprechender Abschnitt der Wellrohrschlauchleitung 2 bereitgestellt. Fig. 3 veranschaulicht diese. Zur Vorbereitung des Wellrohrschlauchs 2 auf seinen Anschluss an die Fassung 3 wird nun von einem Endabschnitt 24 des Wellrohrs 6 ein großer Teil der Ummantelung 11 entfernt. Der Endabschnitt 24 ist dabei so lang, dass er zumindest zwei, vorzugsweise aber mehrere, im vorliegenden Ausführungsbeispiel mehr als fünf vollständige Rippen 8 des Wellrohrs 6 umfasst. In diesem Endabschnitt 24 wird nun in einem geeigneten Abtrageverfahren, beispielsweise einem Fräs- oder Schleifverfahren, die Ummantelung 11 soweit entfernt, dass die Rippen 8 in ihren Scheitelzonen 18 von Elastomermaterial nahezu befreit sind. Bei dem Ausführungsbeispiel gemäß Fig. 4 bleiben die Scheitelzonen 18 an ihrer Außenseite noch von einer (hauch-)dünnen Schicht des Elastomermaterials bedeckt. Diese Schicht kann an der ringförmigen Scheitelzone jeder Rippe eine Dicke von beispielsweise lediglich 0,1 mm aufweisen. Sie kann auch dünner (0,01 mm) oder bedarfsweise etwas dicker (z.B. 0,2 mm oder 0,3 mm) sein.

Der gemäß Fig. 4 vorbereitete Wellrohrschlauch ist in dem Endabschnitt 24 zylindrisch. Er wird zur Herstellung der Verbindung mit der Fassung 3 gemäß Fig. 2 in diese eingeführt. Im Anschluss werden ein ringförmiger, etwa zylindrischer Abschnitt 21 des Teils 16 und eine oder mehrere Ringzonen 29, 31 eines Abschnitts 29 des Teils 17 radial nach innen deformiert, d.h. komprimiert, so dass sie ihre innere lichte Weite verengen. Die Innenumfangsfläche des Teils 16 legt sich dabei fest an die zylindrische Außenseite des verbleibenden Elastomerkörpers an, wobei insbesondere in dem Bereich der Scheitelzonen 18 der Rippen 8 wegen der radialen Steifigkeit derselben eine hohe Pressung entsteht. Auch die zwischen den Rippen 8 in den Zwischenräumen 9 verbleibenden Elastomerringe 19, legen sich fest an die Innenseite des Teils 16 an. Es entsteht hier eine hohe Flächenpressung. Während die Elastomerringe 19 wie die übrige Elastomerschicht 10 fest, d.h. stoffschlüssig mit dem Wellrohr 6 verbunden ist, liegen die Elastomerringe 19 an der inneren Wandung des Teils 16 lediglich unter Vorspannung an. Zur Herstellung dieser Verbindung sind keinerlei zusätzliche Dichtungselemente - kein O-Ring und keine Dichtungsbuchse - und somit auch kein gesondert vorbereiteter Sitz für ein solches Dichtungselement erforderlich.

In dem in Fig. 1 veranschaulichten Zustand ist der Wellrohrschlauch 2 fluiddicht an die Leitung 4 angeschlossen. In dem von dem Wellrohr 6 umschlossenen Kanal, in den zur Verminderung des Strömungswiederstands noch ein Schlauch 32 eingezogen sein kann, kann ein Fluid unter hohem Druck gehalten werden. Dringt dieses durch einen zwischen der Stirnseite des Wellrohrs 6 und der Stirnseite der Leitung 4 vorhandenen Spalt 34 in die Zone zwischen dem Wellrohr 6 und dem rohrförmigen Teil 16, wird es dort durch die metallische Dichtung zwischen den Scheitelzonen 18 und der inneren Wandung des Teils 16, sowie durch die Elastomerringe 19 gestoppt. Das Fluid kann beispielsweise flüssiges oder gasförmiges CO₂ sein. Außerdem kann dieses geringe Ölmengen enthalten. Den zwischen einen Scheitel einer Rippe 8 und der inneren Wandung des Teils 16 gebildeten engen, von wenig Elastomer gefüllten Spalt oder die sich hier beim Durchquetschen der dünnen Elastomerhaut einstellende Metall/Metall-Dichtung kann das CO₂ nur mit geringster Leckrate durchdringen. Es wird dann von den Elastomerringen 19 aufgefangen, der im Wesentlichen CO₂-dicht ist. Selbst wenn CO₂ in diesen Elastomerring 19 eindiffundieren kann, kann es hier nur einen geringen Partialdruck entwickeln, so dass die durch die nachfolgende Rippe 8 gebildete Metall/Metall-Dichtung vollends abdichtend wirkt.

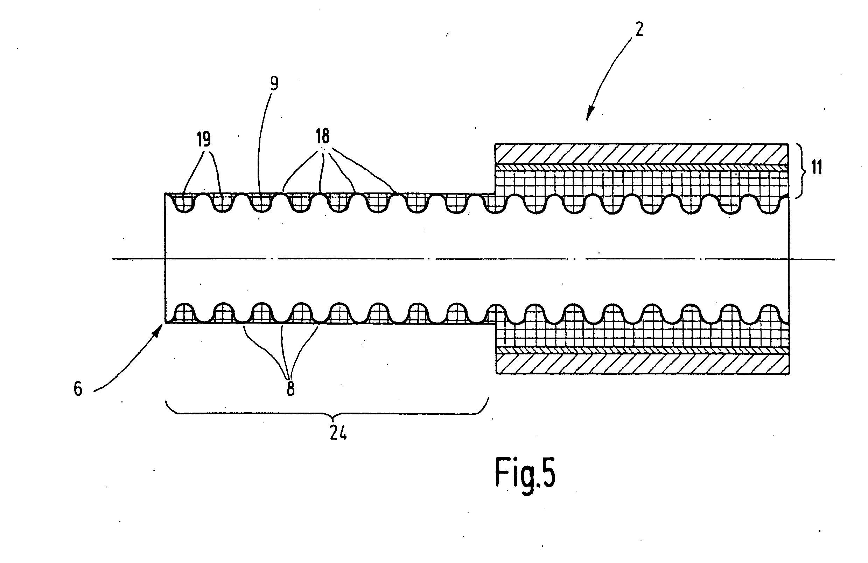

Die insoweit beschriebene Wellrohrschlauchleitung kann in vielfältiger Hinsicht abgewandelt werden. Beispielsweise veranschaulicht Fig. 5 eine erste Abwandlung, bei der der Mantel 11 in dem Endabschnitt 24 soweit entfernt worden ist, dass die Scheitelzonen 18 freiliegen. Die Scheitelzonen 18 bilden hier metallische, linienförmige Ringbereiche, die mit dem Teil 16 der Fassung 3 von vornherein eine Metall/Metall-Dichtung bilden. Die Elastomerringe 19, die stoffschlüssig mit dem Wellrohr 6 verbunden sind, beispielsweise indem sie an diesen anvulkanisiert sind, bilden somit einen zylindrischen Körper, dessen Durchmesser mit dem Durchmesser der kreisförmigen Scheitelzonen 18 übereinstimmt. Beim Komprimieren des Teils 16 der Fassung 3 wird die Kompressionszone des Teils 16 somit gleichermaßen an die Scheitelzonen 18 und an die Elastomerringe 19 angepresst. Durch geringfügige Deformation der Scheitelzonen 18 kommt somit letztendlich auch der von den Elastomerringen 19 gebildete Elastomerkörper unter Druck.

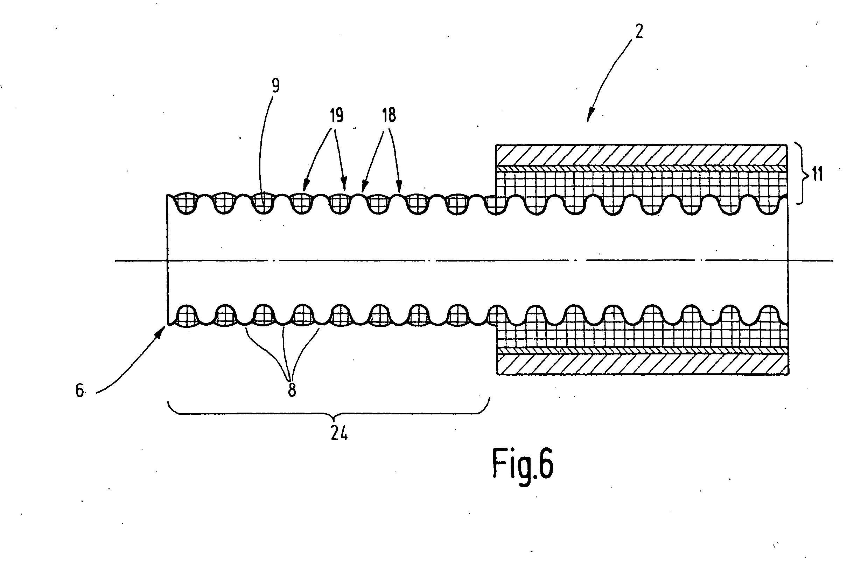

Das Entfernen des Mantels 11 unter Hinterlassung eines zylindrischen Körpers in dem Endabschnitt 24, wie es in Fig. 5 dargestellt ist, stellt eine sehr wirtschaftliche Vorbereitung des Endes des Wellschlauchs 2 vor. Dies insbesondere, weil.auf die Axialposition der Rippen 8 keine Rücksicht genommen werden muss. Wenn dies jedoch möglich ist, kann die Ausführungsform gemäß Fig. 6 Anwendung finden. Bei dieser ist der Mantel 11 in dem Endabschnitt 24 so entfernt, dass die Elastomerringe 19 eine konvex gewölbte Außenseite aufweisen. Die Scheitelzonen 18 der Rippen 8 sind freigelegt. Dies kann auch über eine größere Breite geschehen sein. Die Elastomerringe 19 können an ihren jeweiligen Scheiteln, d. h. Stellen mit größtem Durchmesser, einen Durchmesser aufweisen, der größer ist als der jeweilige größte Durchmesser der benachbarten Rippen 8.

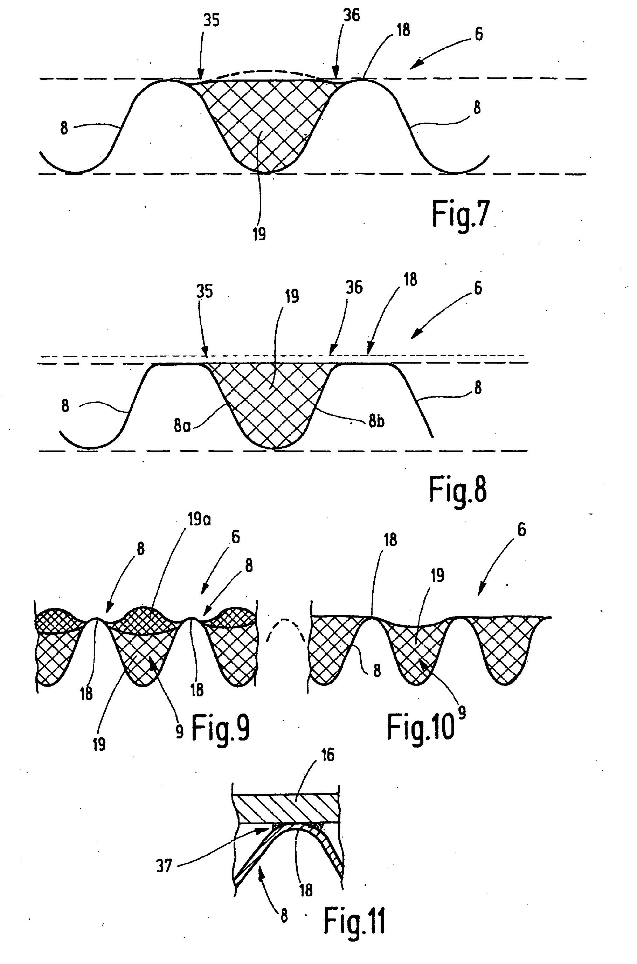

Bei dieser Ausführungsform ergibt sich eine besonders hohe Presswirkung auf die Elastomerringe 19. Das Verpressen derselben mit der Fassung 3 ist in den Fig. 7 und 8 nochmals detaillierter veranschaulicht. Der Elastomerring 19 kann, wie Fig. 7 veranschaulicht, den gleichen Durchmesser wie die Scheitelzonen 18 oder (gestrichelt dargestellt) einen etwas größeren Durchmesser aufweisen. Im unmittelbaren Anschluss an die Scheitelzonen können die Elastomerringe mit Rillen 35, 36 versehen sein, so dass von den Rippen 8 jeweils ein streifenförmiger Bereich von Elastomer befreit ist (nicht lediglich ein linienförmiger Bereich). Wird nun das Teil 16 der Fassung 3 komprimiert, entsteht der in Fig. 8 veranschaulichte Zustand. Die Scheitelzonen 18 der Rippen 8 können etwas radial nach innen deformiert sein. Der Elastomerring 19 muss dabei ebenfalls nach innen ausweichen. Er kann dazu die Rillen 35, 36 ausfüllen und außerdem die Flanken 8a, 8b jeder Rippe 8 etwas deformieren. Dabei gerät er aber unter hohen Druck, wodurch er eine gute Diffusionssperre bildet. Außerdem wirkt der Druck der Elastomerringe 19 auf die Rippen 8 aussteifend für diese.

Fig. 9 veranschaulicht eine abgewandelte Ausführungsform des freigelegten Endes des Wellrohrschlauchs 6. Die Elastomerringe 19 sind in den Zwischenräumen 9 zunächst zu einem größeren Teil entfernt worden. Es ist dann auf den Elastomerring 19 ein weiterer Elastomerring 19a aufgebracht worden, beispielsweise in Form einer Wulst wenig oder nicht vernetzten Materials, das durch Temperatur, Druck oder mit der Zeit durch chemische Reaktion vernetzt. Dadurch kann eine stoffschlüssige Verbindung zwischen dem Elastomerring 19 und dem äußeren Teil 16 der Fassung 3 erreicht werden.

Fig. 10 veranschaulicht eine weitere Ausführungsform des Endes des Wellrohrs 6, bei dem die Elastomerringe 19 konkav gewölbt sind und somit unter dem Durchmesser der Scheitelzonen 18 der Rippen 8 zurückbleiben. Beim Anschluss des derart vorbereiteten Wellrohrschlauchs an die Fassung 3 werden vorwiegend die Metall/Metall-Dichtungen zwischen den Ringzonen 18 und dem Teil 16 der Fassung 3 wirksam. Dies kann ohne weiteres genügen. Falls der Elastomerring 19 quellfähig ist, kann außerdem eine Quellwirkung dazu genutzt werden, die Presswirkung zu erhöhen, falls die jeweils vorgelagerte Metall/Metall-Dichtung mit der Zeit Fluid zu dem Elastomerring 19 durch lässt.

Eine weitere Besonderheit erfindungsgemäßer Ausführungsformen veranschaulicht Fig. 11, die den metallischen Kontakt zwischen der Ringzone 18 einer Rippe 8 und dem Teil 16 veranschaulicht. Besteht das Wellrohr 6 und somit die Rippe 8 aus Edelstahl oder einem anderen relativ korrosionsträgen Material und besteht das Teil 16 aus einem unedlen, d.h. relativ reaktionsfreudigen Material, wie es beispielsweise eine Aluminiumlegierung ist, kann es in dem Berührungsspalt zwischen der Scheitelzone 18 und der inneren Wandung des Teils 16 zur Korrosion kommen. Es können Korrosionsprodukte 37 beispielsweise in Form von Aluminiumoxiden, Aluminiumsalzen oder Aluminiumhydroxid entstehen, die die vorhandene Trennfuge gasdicht verschließen. Dieser Effekt kann durch gezielte Beeinflussung der Feuchtigkeit beim Zusammenbau der Wellrohrschlauchleitung 1 gezielt genutzt werden. Der Effekt kann auch durch reaktionsfördernde Stoffe bewirkt werden, die gesondert eingebracht werden oder auch aus dem Elastomerring 19 ausdiffundieren. Solche Stoffe können z.B. anorganische oder organische Säuren oder Salze, Alkohole oder andere Oxidantien (oxidierend wirkende Stoffe) sein.

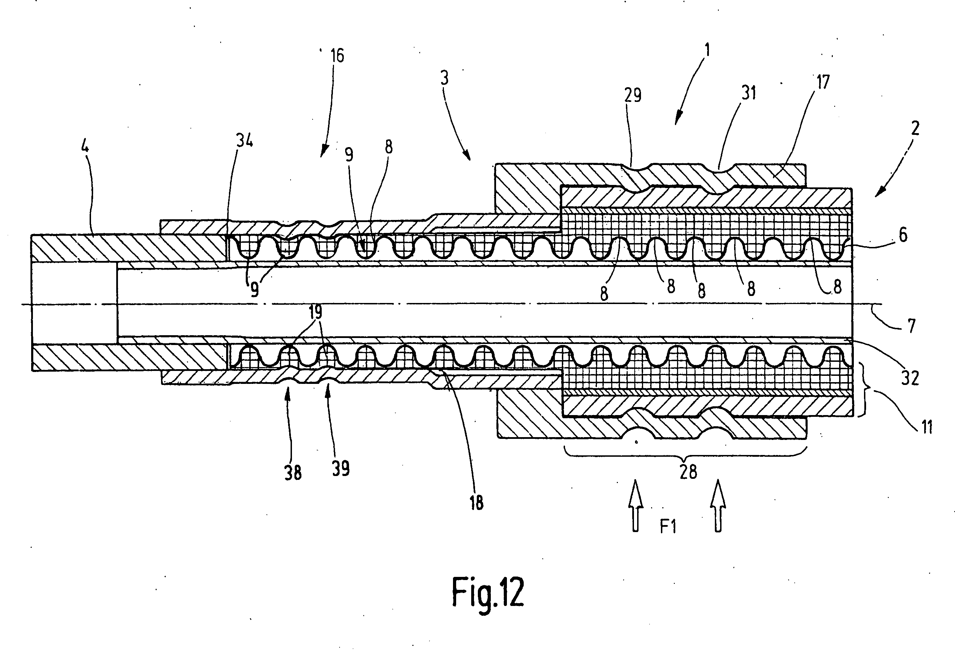

Eine weitere Ausführungsform der Erfindung ist in Fig. 12 veranschaulicht. Diese unterscheidet sich von der Ausführungsform gemäß Fig. 1 zunächst dadurch, dass in dem Abschnitt 21 zusätzlich zu der dort vorhandenen Verpressung ein, zwei oder mehrere Ringzonen 38, 39 vorgesehen werden, in denen das Teil 16 radial nach innen deformiert ist. Die Ringzonen 38, 39 sind vorzugsweise im Bereich von Zwischenräumen 9, d. h. Elastomerringen 19 angeordnet. Damit kann sichergestellt werden, dass nicht nur ein inniger Metall/Metall-Kontakt hergestellt, sondern außerdem eine hohe Druckkraft auf die Elastomerringe 19 ausgeübt wird.

Zu der erfindungsgemäßen Wellrohrschlauchleitung gehören ein Wellrohrschlauch 2 und eine Fassung 3. Der Wellrohrschlauch wird zur Verbindung mit der Fassung 3 vorbereitet, indem an seinem Ende die äußere Ummantelung von dem Wellrohr 6 entfernt wird. Dabei wird der Mantel 11 soweit abgetragen, dass die ringförmigen Scheitelzonen der Rippen 8 freigelegt werden, während in den Zwischenräumen 9 ringförmige Elastomerkörper verbleiben. Die Fassung 3 enthält einen rohrförmigen Teil 16, der durch radial nach innen gerichtete Deformierung auf diesen freigelegten Teil des Wellrohrs 6 aufgepresst wird. Es entstehen Labyrinthdichtungen in Form einer Folge von Metall/Metall-Dichtungen und Elastomerringen 19. Die vorgestellte Anschlusstechnik eignet sich insbesondere zum Anschluss von Wellrohrschlauchleitungen 1 mit sehr dünnwandigem, nicht druckfestem Wellrohr 6.

## Patentansprüche

1. Wellrohrschlauchleitung (1), insbesondere für Druck führende Einrichtungen,
mit einem Wellrohrschlauch (2), der ein Wellrohr (6) aufweist, das axial voneinander beabstandete ringförmige Rippen (8) oder eine oder mehrere schraubenförmige Rippen aufweist und das von einer Ummantelung (11) umgeben ist, die das Wellrohr (6) mit Ausnahme wenigstens eines Endbereichs (24) umgibt,
wobei in dem Endbereich (24) wenigstens zwischen zwei Rippen (8), oder im Falle einer schraubenförmigen Rippe, wenigstens zwischen zwei benachbarten Windungen derselben Elastomermaterial (19) vorhanden ist, das mit dem Wellrohr (6) stoffschlüssig verbunden ist,
mit einer Fassung (3), die einen ersten rohrförmigen Teil (16) zur Aufnahme des Endbereichs (24) aufweist,
mit einem Leitungsmittel (4), das mit dem rohrförmigen Teil (16) fluiddicht verbunden ist,
wobei wenigstens der erste rohrförmige Teil (16) in seiner Radialrichtung derart deformiert ist, dass er mit seiner Innenwandung (18) unter Ausbildung einer Metall/Metall-Dichtungsstelle an wenigstens einer Rippe (8) des Wellrohrs (6) und unter Ausbildung einer Metall/Elastomer-Dichtungsstelle an dem zwischen den Rippen (8), oder im Falle schraubenförmiger Rippen zwischen benachbarten Windungen derselben, vorhandenem Elastomermaterial abdichtend anliegt.

2. Wellrohrschlauchleitung nach Anspruch 1, **dadurch gekennzeichnet, dass** die Fassung einen zweiten rohrförmigen Teil (17) mit einer Öffnung (22) zur Aufnahme eines Abschnitts (28) der Ummantelung (11) aufweist.

3. Wellrohrschlauchleitung nach Anspruch 1, **dadurch gekennzeichnet, dass** der erste rohrförmige Teil (16) in seiner Radialrichtung derart deformiert ist, dass er mit seiner Innenwandung (18) an mehreren Rippen (8) oder Windungen des Wellrohrs (6) abdichtend anliegt und dass zwischen dem ersten Teil (16) und dem Wellrohr (6) ein Presssitz ausgebildet ist.

4. Wellrohrschlauchleitung nach Anspruch 1, **dadurch gekennzeichnet, dass** das zwischen zwei Rippen (8) oder Windungen vorhandene Elastomermaterial mit den benachbarten Rippen (8) oder Windungen in entspanntem Zustand eine zylindrische Fläche festlegt.

5. Wellrohrschlauchleitung nach Anspruch 1, **dadurch gekennzeichnet, dass** das zwischen zwei Rippen (8) oder Windungen vorhandene Elastomermaterial in entspanntem Zustand über die benachbarten Rippen (8) oder Windungen vorsteht.

6. Wellrohrschlauchleitung nach Anspruch 1, **dadurch gekennzeichnet, dass** das zwischen benachbarten Rippen (8) oder Windungen vorhandene Elastomermaterial Teil der Ummantelung (11) ist.

7. Wellrohrschlauchleitung nach Anspruch 1, **dadurch gekennzeichnet, dass** das zwischen benachbarten Rippen (8) oder Windungen Elastomermaterial gegen das von dem Wellrohr (6) einzuschließende Fluid beständig ist.

8. Wellrohrschlauchleitung nach Anspruch 10 und 11, **dadurch gekennzeichnet, dass** das zwischen benachbarten Rippen (8) oder Windungen Elastomermaterial quellfähig ist.

9. Wellrohrschlauchleitung nach Anspruch 11, **dadurch gekennzeichnet, dass** das Elastomermaterial durch das einzuschließende Fluid oder Bestandteile desselben quellfähig ist.

10. Wellrohrschlauchleitung nach Anspruch 1, **dadurch gekennzeichnet, dass** zwischen mehreren Rippen (8) oder Windungen Elastomermaterial vorgesehen ist, um eine Labyrinthdichtung auszubilden.

11. Wellrohrschlauchleitung nach Anspruch 1, **dadurch gekennzeichnet, dass** der erste Teil (16) aus einem Metall besteht, das unedler ist als das Metall, aus dem das Wellrohr (6) besteht.

12. Wellrohrschlauchleitung nach Anspruch 14, **dadurch gekennzeichnet, dass** der erste Teil (16) aus Aluminium oder einer Aluminium-Legierung besteht.

13. Wellrohrschlauchleitung nach Anspruch 14, **dadurch gekennzeichnet, dass** durch vorhandene Feuchtigkeit an der Berührungsstelle zwischen dem ersten Teil (16) und der Rippen (8) oder Windung des Wellrohrs die Entstehung einer Korrosionszone ermöglicht ist.

14. Wellrohrschlauchleitung nach Anspruch 16, **dadurch gekennzeichnet, dass** durch vorhandene Feuchtigkeit an der Berührungsstelle zwischen dem ersten Teil (16) und der Rippen (8) oder Windung des Wellrohrs Korrosionsprodukte erzeugt werden.

15. Wellrohrschlauchleitung nach Anspruch 1, **dadurch gekennzeichnet, dass** in dem Wellrohr (6) ein Schlauch (32) angeordnet ist.

16. Wellrohrschlauchleitung nach Anspruch 1, **dadurch gekennzeichnet, dass** der gesamte Endbereich (24) des Wellrohrs (6) zwischen der Kompressionszone (21) des Teils (16) bis zu der intakten Ummantelung (11) an der Innenwandung der Fassung (3) anliegt.

17. Verfahren zum Anschließen eines Wellrohrschlauchs (2) an andere Leitungsmittel (4), zur Herstellung einer Wellrohrschlauchleitung nach Anspruch 1, mit folgenden Schritten:
- Entfernen der Ummantelung (11) des Wellrohrschlauchs (2) in einem Endbereich (24), dessen Länge geringer ist als die Länge eines ersten Teils (16) einer Fassung (3) unter Belassung des Materials der Ummantelung wenigstens in einem Bereich zwischen zwei benachbarten Rippen (8) oder Windungen seines Wellrohrs (6),
- Säubern der freigelegten Bereiche des Wellrohrs (6) und Herstellen einer definierten Außenform des zwischen den Rippen (8) oder Windungen verbleibenden Materials (19),
- Aufbringen der Fassung (3) auf den Endbereich (24, 28) des Wellrohrschlauchs (2),
- Verformen der Fassung (3) zur Sicherung und Abdichtung derselben gegen das Wellrohr (6).

## Claims

1. Corrugated hose line (1), in particular, for pressurized devices, comprising
a corrugated hose line (2) comprising a corrugated pipe (6), comprising axially spaced apart ring-shaped ribs (8) or one or more helical ribs, and which is enclosed by a jacket (11), said jacket enclosing the corrugated pipe (6) with the exception of at least one end section (24),
wherein an elastomer material (19) is provided in the end region (24) between at least two ribs (8) or, in the case of a helical rib, between at least two adjacent convolutions of said rib, said elastomer material being firmly bonded to the corrugated pipe (6), and comprising
a fitting (3), said fitting comprising a first tubular part (16) disposed to accommodate the end region (24), and comprising
a conveying means (4), said conveying means being connected to the tubular part (16) in a fluid-tight manner,
wherein at least the first tubular part (16) is deformed in its radial direction in such a manner that the interior wall (18) of said tubular part abuts in a sealing manner against elastomer material that is present on at least one rib (8) of the corrugated pipe (6) thus forming a metal/metal sealing point and against elastomer material that is present on the ribs (8) thus forming a metal/elastomer sealing point, or against elastomer material that is present between two adjacent convolutions of the ribs in case said ribs are helical ribs.

2. Corrugated hose line as in Claim 1, **characterized in that** the fitting comprises a second tubular part (17) having an opening (22) disposed to accommodate a section (28) of the jacket (11).

3. Corrugated hose line as in Claim 1, **characterized in that** the first tubular part (16) is deformed in its radial direction in such a manner that the interior wall (18) of said first tubular part abuts in a sealing manner against several ribs (8) or convolutions of the corrugated pipe (6), and that a force fit is created between the first part (16) and the corrugated pipe (6).

4. Corrugated hose line as in Claim 1, **characterized in that**, in relaxed state, the elastomer material present between the two ribs (8) or convolutions defines a cylindrical area with the adjacent ribs (8) or convolutions.

5. Corrugated hose line as in Claim 1, **characterized in that**, in relaxed state, the elastomer material present between two ribs (8) or convolutions projects beyond the ribs (8) or convolutions.

6. Corrugated hose line as in Claim 1, **characterized in that** the elastomer material present between adjacent ribs (8) or convolutions is part of the jacket (11).

7. Corrugated hose line as in Claim 1, **characterized in that** the elastomer material present between adjacent ribs (8) or convolutions is resistant to the fluid that is to be enclosed by the corrugated pipe (6).

8. Corrugated hose line as in Claims 10 and 11, **characterized in that** the elastomer material present between adjacent ribs (8) or convolutions is swellable.

9. Corrugated hose line as in Claim 11, **characterized in that** the elastomer material is swellable by the fluid that is to be enclosed or by the components of said fluid.

10. Corrugated hose line as in Claim 1, **characterized in that** elastomer material is provided between several ribs (8) and convolutions in order to form a labyrinth seal.

11. Corrugated hose line as in Claim 1, **characterized in that** the first part (16) consists of a metal that is less precious than the metal of which the corrugated pipe (6) consists.

12. Corrugated hose line as in Claim 14, **characterized in that** the first part (16) consists of aluminum or of an aluminum alloy.

13. Corrugated hose line as in Claim 14, **characterized in that** moisture present at the site of contact between the first part (16) and ribs (8) or convolutions of the corrugated pipe enables the formation of a corrosion zone.

14. Corrugated hose line as in Claim 16, **characterized in that**, due to moisture present at the site of contact between the first part (16) and the ribs (8) or convolutions, corrosion products are formed.

15. Corrugated hose line as in Claim 1, **characterized in that** a tube (32) is arranged in the corrugated pipe (6).

16. Corrugated hose line as in Claim 1, **characterized in that** the entire end region (24) of the corrugated pipe (6) between the compression zone (21) of the part (16) up to the intact jacket (11) abuts against the interior wall of the fitting (3).

17. Method for connecting a corrugated hose line (2) to other conveying means (4) for the production of a corrugated hose line as in Claim 1, said method comprising the following steps:
- removing the jacket (11) of the corrugated hose line (2) in an end region (24) region having a length that is smaller than the length of a first part (16) of a fitting (3) while leaving the material of the jacket in place at least in a region between two adjacent ribs (8) or convolutions of its corrugated pipe (6),
- cleaning the exposed regions of the corrugated pipe (6) and producing a defined exterior form of the material (19) remaining between the ribs (8) or the convolutions,
- installing the fitting (3) on the end region (24, 28) of the corrugated hose line (2),
- deforming the fitting (3) for the purpose of securing and sealing said fitting relative to the corrugated pipe (6).

## Revendications

1. Conduite pour tuyau ondulé (1), notamment pour des dispositifs conduisant la pression,
comprenant un tuyau ondulé (2) qui présente un tube ondulé (6), qui présente des nervures annulaires (8) écartées axialement les unes des autres ou une ou plusieurs nervures hélicoïdales et qui est entouré par une enveloppe (11), qui entoure le tube ondulé (6) à l'exception d'au moins une zone terminale (24),
le même matériau élastomère (19) qui est relié par liaison de matière au tube ondulé (6) étant présent dans la zone terminale (24) au moins entre deux nervures (8) ou, dans le cas d'une nervure hélicoïdale, au moins entre deux enroulements voisins,
comprenant un support (3) qui présente une première partie tubulaire (16) pour recevoir la zone terminale (24),
comprenant un moyen de conduite (4) qui est relié de manière étanche aux fluides à la partie tubulaire (16),
dans laquelle au moins la première partie tubulaire (16) est déformée dans sa direction radiale, de telle sorte qu'elle repose de manière étanche avec sa paroi interne (18) en formant un point d'étanchéité métal/métal sur au moins une nervure (8) du tube ondulé (6) et en formant un point d'étanchéité métal/élastomère sur le matériau élastomère présent entre les nervures (8) ou, dans le cas de nervures hélicoïdales, entre des enroulements voisins de celles-ci.

2. Conduite pour tuyau ondulé selon la revendication 1, **caractérisée en ce que** le support présente une seconde partie tubulaire (17) avec une ouverture (22) pour recevoir une section (28) de l'enveloppe (11).

3. Conduite pour tuyau ondulé selon la revendication 1, **caractérisée en ce que** la première partie tubulaire (16) est déformée dans sa direction radiale, de telle sorte qu'elle repose de manière étanche avec sa paroi interne (18) sur plusieurs nervures (8) ou enroulements du tube ondulé (6) et qu'un ajustage serré est réalisé entre la première partie (16) et le tube ondulé (6).

4. Conduite pour tuyau ondulé selon la revendication 1, **caractérisée en ce que** le matériau élastomère présent entre deux nervures (8) ou enroulements définit une surface cylindrique avec les nervures (8) ou enroulements voisins à l'état détendu.

5. Conduite pour tuyau ondulé selon la revendication 1, **caractérisée en ce que** le matériau élastomère présent entre deux nervures (8) ou enroulements fait saillie au-dessus des nervures (8) ou enroulements voisins à l'état détendu.

6. Conduite pour tuyau ondulé selon la revendication 1, **caractérisée en ce que** le matériau élastomère présent entre des nervures (8) ou enroulements voisins fait partie de l'enveloppe (11).

7. Conduite pour tuyau ondulé selon la revendication 1, **caractérisée en ce que** le matériau élastomère entre des nervures (8) ou enroulements voisins est résistant au fluide à contenir par le tube ondulé (6).

8. Conduite pour tuyau ondulé selon la revendication 10 ou 11, **caractérisée en ce que** le matériau élastomère entre des nervures (8) ou enroulements voisins peut gonfler.

9. Conduite pour tuyau ondulé selon la revendication 11, **caractérisée en ce que** le matériau élastomère peut gonfler grâce au fluide à contenir ou des constituants de celui-ci.

10. Conduite pour tuyau ondulé selon la revendication 1, **caractérisée en ce que** du matériau élastomère est prévu entre plusieurs nervures (8) ou enroulements pour former une bague à labyrinthe.

11. Conduite pour tuyau ondulé selon la revendication 1, **caractérisée en ce que** la première partie (16) se compose d'un métal qui est plus commun que le métal qui compose le tube ondulé (6).

12. Conduite pour tuyau ondulé selon la revendication 14, **caractérisée en ce que** la première partie (16) se compose d'aluminium ou d'un alliage d'aluminium.

13. Conduite pour tuyau ondulé selon la revendication 14, **caractérisée en ce que** l'apparition d'une zone de corrosion est permise par l'humidité présente sur le point de contact entre la première partie (16) et les nervures (8) ou l'enroulement du tube ondulé.

14. Conduite pour tuyau ondulé selon la revendication 16, **caractérisée en ce que** des produits de corrosion sont générés par l'humidité présente sur le point de contact entre la première partie (16) et les nervures (8) ou l'enroulement du tube ondulé.

15. Conduite pour tuyau ondulé selon la revendication 1, **caractérisée en ce qu'**un tuyau (32) est disposé dans le tube ondulé (6).

16. Conduite pour tuyau ondulé selon la revendication 1, **caractérisée en ce que** l'ensemble de la zone terminale (24) du tube ondulé (6) repose entre la zone de compression (21) de la partie (16) jusqu'à l'enveloppe intacte (11) sur la paroi interne du support (3).

17. Procédé pour le raccord d'un tuyau ondulé (2) à d'autres moyens de conduite (4) pour réaliser une conduite souple pour tube ondulé selon la revendication 1, comprenant les étapes suivantes :
- retrait de l'enveloppe (11) du tuyau ondulé (2) dans une zone terminale (24) dont la longueur est inférieure à la longueur d'une première partie (16) d'un support (3) en laissant le matériau de l'enveloppe au moins dans une zone entre deux nervures (8) ou enveloppements voisins de son tube ondulé (6),
- nettoyage des zones libérées du tube ondulé (6) et réalisation d'une forme externe définie du matériau (19) restant entre les nervures (8) ou enroulements,
- montage du support (3) sur la zone terminale (24, 28) du tuyau ondulé (2),
- déformation du support (3) pour fixation et étanchéification de celui-ci contre le tube ondulé (6).
